Europäisches Patentamt

European Patent Office

Office européen des brevets

(11) Publication number: **0 329 985 B1**

## EUROPEAN PATENT SPECIFICATION

(45) Date of publication of patent specification: **23.06.93**   (51) Int. Cl.5: **G21C 7/10**, G21C 7/24, G21C 7/26

(21) Application number: **89101715.4**

(22) Date of filing: **01.02.89**

(54) Nuclear Reactor operating method with extended life cycle.

(30) Priority: **22.02.88 US 161395**

(43) Date of publication of application:
**30.08.89 Bulletin 89/35**

(45) Publication of the grant of the patent:
**23.06.93 Bulletin 93/25**

(84) Designated Contracting States:
**BE DE ES FR GB IT SE**

(56) References cited:
**EP-A- 0 193 923**
**EP-A- 0 231 710**
**FR-A- 2 395 572**
**US-A- 4 248 667**
**US-A- 4 642 216**

(73) Proprietor: **WESTINGHOUSE ELECTRIC COR-
PORATION
Westinghouse Building Gateway Center
Pittsburgh Pennsylvania 15222(US)**

(72) Inventor: **Little, David Carl
445 Crestview Drive
Pittsburgh, PA 15239(US)**

(74) Representative: **Gallo, Wolfgang, Dipl.-Ing.
(FH) et al
Patentanwälte Dipl.-Ing. L. Fleuchaus
Dipl.-Phys. H. Schroeter Dipl.-Ing K. Leh-
mann, Dipl.-Ing.W. Wehser Dipl.-Ing. R. Hol-
zer, Dipl.-Ing.(FH) W. Gallo Ludwigstrasse 26
W-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.6/3.3. 1)

## Description

BACKGROUND OF THE INVENTION

This invention relates to a method of operating a nuclear reactor with an extended life cycle of its nuclear core, as defined in the precharacterising portion of claim 1.

It is well known that commercial pressurized light water nuclear reactors are both a technical and commercial success. In such reactors a reactive region commonly referred to as a nuclear core contains fissile fuel such as uranium-235 or plutonium-239 and plutonium-241 in which sustained fission reactions occur to generate heat. A group of mechanical components, which are known as reactor internals, structurally support the core within a hermetically-sealed pressure vessel. The reactor internals also direct the flow of a cooling medium, such as light water, through the nuclear core and out of the pressure vessel. The cooling medium, which is alternately called the reactor coolant, removes the heat generated by the nuclear core and transfers the heat to another cooling medium within heat exchangers, which are located external to the pressure vessel. The second cooling medium is usually water, which is converted into steam in the heat exchangers and is used to produce electricity by conventional steam turbine-electrical generator combinations.

In general in such reactors, the nuclear core is comprised of a plurality of elongated fuel assemblies, having a square cross-section, which are stacked together in a side-by-side array. Each fuel assembly comprises a plurality of fuel rods, which are also stacked together in a side-by-side array. The fuel rods are typically comprised of a hollow tube having a number of nuclear fuel pellets contained therein. Each tube is sealed at both ends by end plugs, which are welded to the tube.

In any reactor, such as the one described, at a given power level, the fission rate of the nuclear fuel, or the number of neutrons produced by the fission process, remains essentially constant. It is well known that a fission, which primarily occurs when a fissile isotope absorbs a neutron, creates heat and releases two or more neutrons. To sustain the nuclear chain reaction, one of the newly produced neutrons must produce another fission. In water reactors the hydrogen in the water serves as the primary means by which fast neutrons, produced by fission, are thermalized, or slowed down, thereby increasing the probability that another fission may occur.

In the sustained chain reaction, the excess neutrons (neutrons produced by fission minus the one needed for the next fission) must be removed. Some of the excess neutrons are leaked from the core. Others are absorbed by fertile isotopes, or those isotopes which can transmute to a fissile isotope, thus creating more fuel. Plutonium-239 is produced from uranium-238 by this process. Still other neutrons are absorbed in nonproductive reactions by fission products (e.g., xenon, samarium, etc.) as well as in poisons introduced by design. Among those introduced by design are control rods; soluble boron, which is dissolved in the primary coolant; and, burnable absorbers. Control rods are used for the short term control of the reactor, while the soluble boron is used largely for the long term control. Burnable absorbers are selectively placed within the core to reduce localized power peaking and/or to reduce the soluble boron requirements early in the life of the core. As the fuel depletes, the burnable absorbers also deplete, compensating in part for the increase in fission product poisons in the fuel. Burnable absorbers can be introduced as special rods, or as an integral part of the fuel rod.

The balance of neutrons, generally described above, can be expressed in a useful term known as "reactivity." Reactivity can be used to describe the core average condition or an intrinsic local condition, as if the local region were independent of the remainder of the core. Reactivity is calculated as the production of neutrons divided by the loss of neutrons. The reactivity for the self-sustained reaction, or critical core, is 1.0. For actual steady state operation the core must maintain this condition. Changes in this condition in the actual operating core cause a transient behavior, resulting in changing power levels. Thus, if excess reactivity is added to a core, the power will increase.

The intrinsic reactivity of a local region is usually expressed as though there were an infinite core containing only the local region fuel and nonfuels without any soluble boron present. In the typical multiregion core some regions have intrinsic reactivity values greater than 1.0. In order to obtain the required critical core condition, the high reactivity regions must leak neutrons to the low reactivity regions. The soluble boron level is then adjusted to take up any core averaged excess reactivity. Since certain regions can be burned to intrinsic reactivity levels much less than 1.0, the multiregion core allows for better utilization of fuel.

In order to achieve the desired energy requirements, excess reactivity (excluding control rods and soluble boron) is designed into the core at startup and is depleted over the life of the core. The excess reactivity is primarily controlled during depletion using soluble boron. Thus, as the excess reactivity and net fuel content decreases and the fission poisons increase with core burnup, the amount of soluble poison must, accordingly, be decreased to maintain criticality. The use of burnable poisons also compensates in part for fuel depletion. In this manner, the excess reactivity is held in abeyance. The depletion continues until the core can no longer sustain the chain reaction or until reactor control is determined to become too difficult, such as the inability to reduce the soluble boron level below certain low levels. Once depleted, it is necessary to shut the reactor down and refuel.

The typical commercial reactor is zoned with several regions of fuel. For example, many cores contain three zones with each zone containing a number of fuel assemblies having similar reactivity. When the reactor is shut down, one zone might contain once-burned fuel assemblies, the second zone might contain twice-burned fuel assemblies, and the third zone might contain thrice-burned fuel assemblies. The thrice-burned fuel assemblies would then be discharged from the core and stored in the spent fuel storage facilities. The twice-burned and once-burned fuel assemblies would be repositioned in the core along with the new fuel and any burnable absorbers, such that power distribution limits for each assembly will be met. The quantity and enrichment of the new fuel is determined by the required excess core reactivity at startup in order to achieve the desired cycle energy production by the end of cycle. This process is repeated with each successive core refueling. The purpose of this method of core cycling is to maximize the consumption, or burnup, of the nuclear fuel as much as possible.

Using the general concepts described above, there exist many ways to improve upon the utilization of fuel and, therefore, fuel cycle costs. Two of these serve as background for the present invention. These methods include the use of low leakage fuel cycle designs and the use of spectral shift concepts.

The general principle of low leakage patterns is that the fresh fuel is placed in the core away from the periphery, pulling power away from the periphery. The reduction in power at the edge of the core reduces the neutrons which leak, making more neutrons available for producing fissions and, thus, increasing reactivity. This excess reactivity can be used to reduce the fuel enrichment required to obtain the desired cycle energy production. This reduces the fuel cost for this cycle.

The other useful concept is known as power sharing and plays a role in the reactivity gain (or loss) for low leakage designs. The power sharing of a region of fuel is simply expressed as the fraction of total core power produced by that region's fuel. Since the core reactivity is a neutron balance of its constituent parts, those parts or regions with higher power are weighted more heavily in the overall balance depending upon the total number of assemblies in that region. The higher reactivity fuel acts as a source of neutrons for the lower reactivity fuel by leaking neutrons between assemblies. The higher the power of an assembly is the more neutrons that are produced. Since the higher reactivity fuel generates "excess" neutrons, the higher the power is in the higher reactivity assemblies, the more the overall core reactivity balance will be raised.

The above discussion of power sharing holds true for any given moment in the core life. However, the integrated effect of high power is higher region burnup and the higher burnup reduces the region reactivity towards end-of-life. Thus, the trend of a low leakage core is to begin the cycle with very low power at the core periphery by placing the high reactivity assemblies inboard. This produces higher power in these assemblies which increases region burnup by the end-of-life cycle (EOC). This shifts some power back to the periphery and causes some loss in total core reactivity due to a slight increase in leakage from beginning-of-cycle (BOC) and due to the lower power sharing and lower reactivity of the higher reactivity assemblies.

## SUMMARY OF THE INVENTION

The present invention intends to further improve the efficient use of nuclear fuel and, accordingly, resides in the method of operating a nuclear reactor as characterized in claim 1.

A means of controlling the trend of a low leakage core is the basis of the present invention, which will be hereinafter referred to as "power shift." By selectively placing the fresh or high reactivity assemblies in the interior of the cure under moveable rod locations, moderate absorber rods, or "power suppression rods," can be used to reduce the power in these assemblies early in core life, when inserted. These locations would presumably be in the interior of the core. The reduction in power reduces the cumulative burnup of these assemblies. Then, at some point later in the cycle, the rods would be removed providing a shift in power distribution of the core away from the core periphery to the assemblies under these rods. The shift in power away from the periphery would preserve the low leakage benefit at end-of-cycle (EOC), at which point the life of the core is determined (that is, criticality must be maintained throughout core life). Because the power is kept low in the assemblies under the power suppression rods during the early part of the cycle, the burnup is according low and the power and reactivity of these assemblies will consequently be high once the rods are withdrawn. This produces an additional power sharing benefit.

Therefore, instead of the inherent trade-off between low leakage benefit, which deteriorates during the cycle depletion, and the loss in reactivity due to adverse power sharing, "power shift" controls these effects to provide additive reactivity benefits, thus improved fuel cycle costs. The goal of this invention is to design and operate the reactor such that these two effects, low leakage and power sharing, can be controlled in such a way that both will collectively yield higher reactivity at EOC, thus allowing for a further fuel cycle cost benefit over traditional low leakage designs.

Another effect present in this process contributes a negligible benefit, if at all, when compared to the benefit of "power shift." This effect is commonly known as "spectral shift." It is being presented to acknowledge its lesser role in this process and to contrast the means by which "spectral shift" obtains its benefit as compared with "power shift."

Spectral shift is another well-known phenomenon, which, in theory and certain prior at embodiments, has been shown to allow lower nuclear fuel enrichments to be loaded to generate a given amount of power, resulting in a fuel cycle cost benefit. Spectral shift refers to the change in the fast-to-thermal (slow) neutron flux (population) ratio which occurs when water is displaced, then reintroduced, such as a rod in a guide thimble. Light water is an excellent moderator, which serves to thermalize, or slow down, neutrons. These thermal neutrons are the primary source of fissions in the reactor. The displacement of water, therefore, increases the fast-to-thermal ratio, or "hardens" the spectrum. The harder spectrum cause a higher production of plutonium-239 per given amount of burnup. The shift occurs when the water is reintroduced. This increases the thermal neutron flux in the local region around the guide thimble, thus "softening" its spectrum. A soft spectrum increases the fission rate of the accumulated plutonium-239, thereby raising the local reactivity and power over what it might have been had the rod not been present earlier. The net core averaged effect is an increase in reactivity, which represents a potential fuel cost savings.

As with spectral shift, power shift requires the insertion of rods early in the cycle which will ultimately displace water. In both cases the rods will then be withdrawn from the core at some later part of the cycle. The difference in the criteria and configuration is in the composition and location of the spectral shift rods versus the power suppression rods. For spectral shift effects to be effective the rods must be as non-absorptive as possible or the neutrons absorbed will not be available for producing plutonium-239. Secondly, to be effective a large majority of the core must have such rods or the power redistributions could lose a large percentage of the reactivity gains obtained for the spectral shift by adverse power sharing effects. Discrete placement of these rods about the core in a limited number of locations would potentially defeat the purpose of spectral shift.

Power shift places moderate absorptive rods or rod clusters in a limited number of discrete, predetermined locations to take advantage of a shift in power distribution. Since the degree of the absorptive quality of the rods or rod cluster will be reactor dependent, certain situations may arise where the rod absorption is light enough to provide a slight local spectral shift advantage. However, due to the limited number of locations and the probability that the rods will not be as low in overall absorption as typical spectral shift rods, the benefit will be insignificant as compared with the power shift effect.

The power suppression rods, comprising elongated absorber rods, are clustered together in an array coincident with the arrangement of the guide thimbles in a fuel assembly. The clustered rods for each fuel assembly may be attached to a common structural support member. This support member may, in turn, be attached either to a drive mechanism, such as that used to drive and position a control rod assembly within the nuclear core or, perhaps, a hydraulic type drive mechanism.

The movable power suppression rods are selectively positioned at fuel assembly locations where the inboard high reactivity fuel would likely to be located. The suppression rods are inserted in these fuel assemblies for the majority of the operating cycle. The rods reduce burnup in the fuel assemblies containing the rods. By withdrawing the rods near the end of core life, the power shifts toward these fuel assemblies and away from the core periphery, thus reducing leakage. As with the low leakage designs, this provides an increase in reactivity, thus a fuel costs savings, due to the lower leakage and shift in region power sharing. Unlike low leakage fuel patterns, there should not be a significant penalty due to higher region burnups. A slight spectral shift benefit only in the fuel under the power suppression rods should also be realized.

Various other objects, advantages and features of the invention will become apparent to those skilled in the art from the following discussion taken in conjunction with the following drawings, in which:

BRIEF DESCRIPTION OF THE DRAWINGS

Figure 1 is an elevational view, partially in cross-section, of a nuclear reactor to which the present invention may be applied;

Figure 2 is a plan view, partially in cross-section, of a typical fuel assembly incorporating a power suppression rod cluster assembly according to the present invention;

Figure 3 is a cross-sectional view of the fuel assembly of Figure 2, taken along the line 3-3 of Figure 2;

Figure 4 is an enlarged partial plan view of one power suppression rod fitted within a guide tube of the fuel assembly of Figure 2;

Figure 5 is a typical core design for a typical light water commercial reactor, illustrating the fuel assembly locations and the control rod pattern;

Figure 6 is a typical portion of and illustrating one arrangement of a core such as that of Figure 5, utilizing the power suppression rods of the present invention; and,

Figure 7 is a typical fuel reactivity versus burnup curve illustrating the benefits in reactivity obtained by use of the present invention.

## DESCRIPTION OF THE PREFERRED EMBODIMENTS

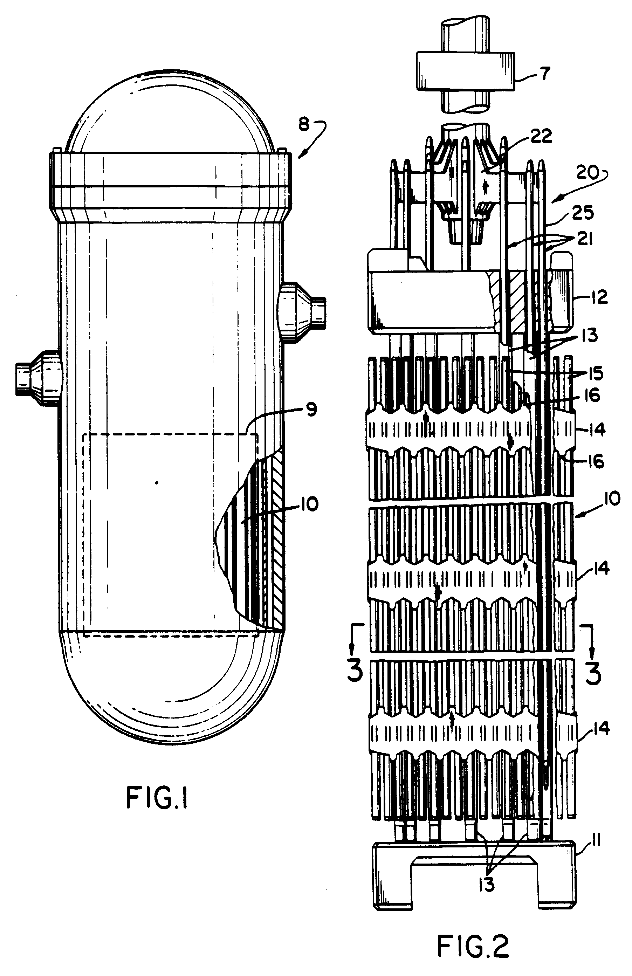

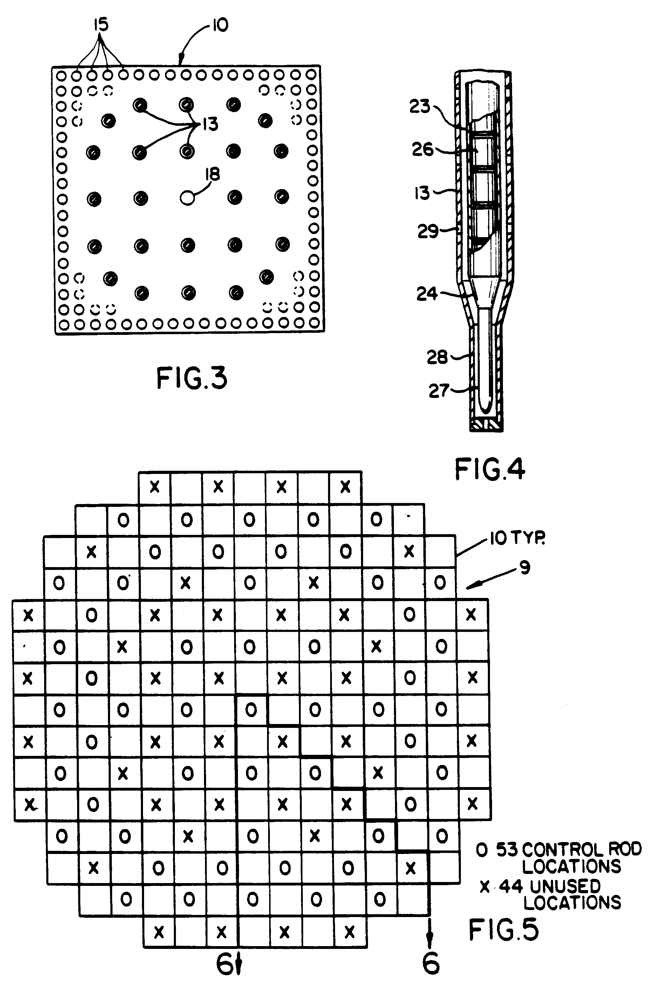

Referring now to the drawings where like features are indicated by the same reference numbers, Figures 1-4 illustrate one embodiment of the present invention. A typical pressurized light water nuclear reactor 8, comprising a nuclear core 9, is shown in Figure 1. Core 9 comprises a plurality of fuel assemblies 10. Fuel assembly 10 comprises a lower nozzle 11, and upper nozzle 12, separated from each other and attached to the ends of a plurality of parallel arranged guide thimble tubes 13. The attachment of the guide tubes 13 to nozzles 11 and 12 comprises a structural joint. A plurality of grids 14 are also structurally attached to guide tubes 13 and spaced along the length thereof. Grids 14 each comprise a box-like structure having a plurality of openings therethrough. Each of the openings in any one grid 14 is axially aligned with the respective openings in each of the other grids 14. Each of a plurality of fuel rods 15, which are arranged in a square parallel array, fit within one of the axially aligned openings in grids 14. Fuel rods 15 are held in place by grids 14 by finger-like springs 16 which bear against the outer diameter of fuel rods 15. In the embodiment shown, fuel assembly 10 comprises a square array of 17 x 17 fuel rods which means that there are seventeen fuel rods on each side of the fuel assembly 10. Figure 3 more clearly shows the square array. It is to be noted, however, that Figure 3 does not show the full number of two hundred and sixty-four fuel rods for purposes of clarity. Fuel assembly 10, including the structural makeup of the same, is one of a type which is well known in the art.

A plurality of fuel assemblies 10 are stacked side by side with a slight amount of clearance there-between and comprise the nuclear core 9. In a four loop nuclear reactor, for example, one hundred and ninety-three fuel assemblies 10 make up the core. Fuel assemblies 10 fit between and are held in place by an upper and a lower core support plate, neither of which is shown in the figures. The remaining structure of a typical nuclear reactor to which the invention may be applied, is not critical to the present invention nor necessary for an understanding of the operation of the same; hence, the remaining structure will not be described. It is to be noted that although a 17 x 17 fuel assembly 10 is shown in the drawings, that the invention, which is more fully described below, is not limited to a 17 x 17 fuel assembly 10; nor is it limited to the specific type of fuel assembly described. By following the description and explanation provided herein, the invention may readily be adapted to any fuel assembly used in a light water nuclear reactor.

In the type of fuel assembly 10 shown in the drawings, there are twenty-four guide tubes 13 and one instrumentation tube 18. Instrumentation tube 18 is the centermost tube in fuel assembly 10.

The power suppression rod assembly 20 comprises a plurality of suppressor rods 21 parallel arranged and structurally attached to a hub assembly 22 much in the same manner as control rods are attached to a hub and as is well known in the art. Hub assembly 22 is attached to a drive mechanism 7 so that suppression rod assembly 20 may be moved in or out of the core at any desired time and by any desired amount during reactor operation. Drive mechanism may comprise mechanical drive apparatus, such as that conventionally used to control the movement of control rods. Also, a single hub assembly 22 may be attached to a plurality of power suppression rod assemblies 20 so that a cluster of assemblies may be driven by a single drive mechanism 7. The power suppression rod assemblies 20 may alternatively be driven into and withdrawn from the reactor core by an appropriate hydraulic drive mechanism such as that described in United States Patent US-A-4,439,054. Thus, while the type of drive mechanism is not important, it is important that the power suppression rods 21, wherever positioned and however attached to a hub, which is, in turn, attached to a drive mechanism, be capable of being inserted to and withdrawn from predetermined fuel assembly positions within a nuclear core.

Guide tubes 13 may be provided with a plurality of openings 29 in the wall thereof and along the length thereof to allow reactor coolant to flow into and out of guide tubes 13 and up within guide tubes 13 to cool the suppression rods 21 during reactor operation. Suppression rods 21 will absorb heat due to gamma-ray irradiation during reactor operation so that it is probably desirable to cool suppression rods 21. To provide for further cooling of suppression rods 21, if required, an annular flow clearance may be provided between the outer diameter of suppression rods 21 and the inner diameter of guide tubes 13.

Referring now to Figure 4, suppression rods 21 may each comprise a tube 23 of a structural material filled with stacked pellets 26 of an appropriate absorber material. End plugs 24 and 25 (Figure 3) are structurally attached to tube 23 to fully contain the pellets 26 within tube 23. A plenum void (not shown) may be conventionally provided within suppression rods 21 at the upper portion thereof to prevent the buildup of high pressure within suppression rods 21 due to the heating of the rod and/or release of gases with depletion. End plug 24 may include an elongated cylindrical portion 27 which serves as a piston, and in conjunction with a dashpot 28, provided at the lower end of each guide tube 13, prevents rapid insertion and possible component damage when suppression rod cluster assembly 20 is inserted within fuel assembly 10.

Suppression rods 21 may also simply comprise a tube 23, or a solid rod (not shown), made from an appropriate structural material and a moderate, non-depletable absorber material. Such a combination would delete the requirement for separate absorber pellets 26 within tube 23. There exists no exact requirement for the material of the tube or rod 23 nor the pellets 26, provided sufficient structural strength and sufficient neutron absorption to reduce the assembly powers by the desired amount are obtained. This will likely vary as a function of specific core design. The neutron absorption of such rod clusters will likely be similar to what is known in the industry as "gray rods." Gray rod clusters are of moderate absorption when compared with the strong absorption of a control rod and the light absorption of the water displacer rod (used in spectral shift cores). The materials often chosen for control rods are silver-indium-cadmium, hafnium, boron carbide or other strongly absorptive material. A material like zirconium, which has low absorption properties, is used for displacer rods. These same materials may be used for the power suppression rods if the number of rodlets of each type is limited on each cluster. For example, an assembly with seventeen pins to a side may have up to twenty-four rodlets. By placing twelve control-type rods and twelve displacer rods the cluster will exhibit about half the absorptive properties of a control rod. Materials such as stainless steel or a hafnium-zirconium allow may also be used to form each of the rodlets of the cluster and a moderate absorption of the cluster should result. A blend of strong and light neutron absorbing materials should be sufficient to obtain the desired moderate absorption required for the specific core design.

The difference in the gray rod and the power suppression rod is in the criteria for determining neutron absorption strength and in the application. Gray rods are used to make small changes in core reactivity or coolant temperature for the purpose of controlling overall core average power. Certain absorption strengths are required to obtain such changes when changing core power without greatly affecting power distribution. The balance of these effects determines the materials to be used. Power suppression rods, on the other hand, are used primarily to make local changes in the power distribution, such that the power is reduced by a predetermined amount in the locations of the high reactivity fuel. This determines the required strength of the neutron absorption for power suppression rods. Gray rods need not to be placed in special locations determined by the intended region fuel loading patterns. Power suppression rods must account for the type of fuel loading pattern to be used.

The physical length and/or the effective length of power suppression rods 21 may be substantially equal to the length of full-length conventional control rods. Alternatively, the effective length of power suppression rods 27 may be any length consistent with the length and the amount of power suppression that is desired. Hence, while full-length power suppression is preferred, part-length power suppression is also satisfactory.

One of the main objects of the invention is to improve what is commonly termed the "fuel cycle cost." This means to extract as much reactivity as possible from nuclear fuel so that less fuel is required to generate a given amount of energy or more energy is generated from a given amount of nuclear fuel. Either way, there results an actual financial costs savings.

A convenient way to determine the average fuel cycle cost differences is by comparing the end-of-life (EOL) reactivity ($K_{EOL}$) for different reactor cores in an equilibrium condition with the same enrichment and same cycle burnup length (equal energy production over the cycle). This EOL reactivity should be evaluated with all the control rods out of the core and a predetermined EOL soluble boron concentration near zero. An increase in end-of-life reactivity allows for a reduction in enrichment in new fuel to obtain the same cycle length and thereby obtain a fuel cycle cost savings.

Reactivity may be simply defined as the production of neutrons divided by the total loss of neutrons. The production of neutrons is the number of fissions (F) multiplied by the average number of neutrons produced per fission (N). Both of these values are basically constant for most reactor cores, especially commercial power plants, since a certain number of fissions are needed to maintain the power rating. The losses of neutrons are due to absorption (A) and leakage (L). The absorption of neutrons occurs in both fission (F) and nonfission, or capture, (C) events.

The above relationship may be expressed in equation form, as such: $K_{EOL} = 1/_{1/N\ +\ C/NF\ +\ L/NF}$. The first term of the denominator (1/N) can be treated as a constant, as previously mentioned. Changes in the third term (L/NF), or core leakage fraction, are somewhat predictable from case to case, since, for a given core type (fixed core geometry and reflector), the leakage changes roughly as the ratio of the average peripheral power between cases. The second term of the denominator (C/NF), or capture fraction, is more complex.

The total capture rate (C) is the sum of the captures of each fuel region ($C_i$), which depends upon the volume of the region multiplied by the average flux of the region and the capture cross-section of the region. The flux increase as the power of that region increases. The capture cross-section, or probability of capture, at a constant soluble boron concentration increases with burnup of the fuel. Since the sum of the fraction of core power or power sharing by the regions is equal to one, power sharing can be viewed as a type of weighting function, especially when the region capture and fission cross-sections are viewed as nearly constant, i.e. when the region average burnup does not significantly change. However, since the capture probability increases and the fission probability decreases with increasing burnup, the total rate of capture is most affected by changes in the burnup of the region or regions with the highest power sharing. Thus, capture varies with changes in region-wise power sharing (changing the flux distribution), and varies with changes in region-wise burnup, which changes the capture and fission cross-section.

At end-of-life, the fuel which is to be discharged must meet an established or predetermined discharge burnup requirement on the average. Therefore, the capture cross-section can be assumed to be constant for this region from case to case. Only those regions which will remain in the core for the next cycle will vary in capture cross-section from case to case. The most recent region to be loaded, or the freshest fuel region, generally has the lowest capture cross-section. By increasing the power sharing of the freshest fuel region, lowering the power on the other regions, "weights" the capture cross-section more heavily for the fresher fuel region. This also reduces the importance of the higher burned regions, which are comprised of fuel with larger values of capture cross-section. Thus, at end-of-life a higher power on the fresher fuel region, and/or a lower burnup on this region, will reduce the total capture (C) consequently increasing reactivity.

Low leakage patterns reduce the leakages at end-of-life by placing more fresh fuel in board or toward the center of the core at the start of the cycle, or beginning-of-life (BOL). This pulls the power away from the core periphery, as compared with standard three zone designs, which load the fresh fuel along the core periphery. The third term of the denominator (L/NF) of the equation, or leakage fraction, is the most significant change for low leakage patterns. The power sharing change, which results in higher power from the fresher fuel, also causes higher burnup on this same fuel, since the power shift occurs too early in the cycle. The high burnup on fresh fuel counters the power sharing effect. Even the use of burnable poisons in these assemblies cannot keep the power low enough and long enough to significantly reduce burnup. Poisons which could achieve this would result in an EOL poison penalty. Therefore, the leakage fraction decreases, while the capture fraction remains roughly unchanged for low leakage patterns. The present invention improves upon this scheme.

The use of power suppression rods 21 allows the operator of the nuclear power plant to have control over the burnup of the inboard fresh assemblies over the entire fuel cycle. The benefits of lower leakage and power sharing redistribution are obtained at EOL by withdrawing the power suppression rods 21 from the fresh fuel.

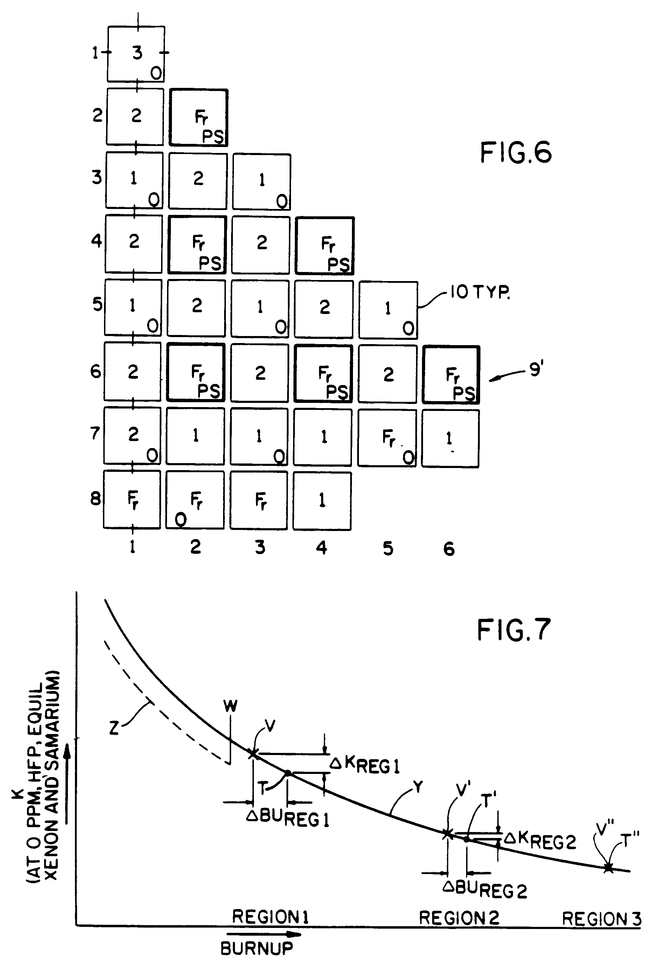

Figure 5 schematically illustrates a representative core control rod pattern for a four loop nuclear reactor having 193 fuel assemblies 10 in the core 9. There are a possible ninety-seven assembly locations which could house control rods. Some control rods are used for only reactor shutdown, while others are used for reactor control and shutdown. All in all, there are fifty-three fuel assembly locations, marked by "O", which are associated with control rods in this design. Therefore, there are forty-four unused locations in the core. They are each marked with an "X". Thus, in the illustrated example, there are forty-four potential locations for the use of power suppression rod assemblies 20.

Figure 6 schematically represents the portion of the core 9 which is outlined in Figure 5. Figure 6, then, represents a one-eighth core model of a three fuel zone, four loop core. Figure 6 also represents a re-arrangement of the fuel assemblies of Figure 5 so as to utilize the power suppression rod assemblies 20 of the present invention. It is to be understood that the remaining seven-eighths of the core of Figure 5 are also to be rearranged as per Figure 6. The one eighth model of Figure 6 is used only for the purposes of convenience and simplicity of illustrating the rearrangement. The fuel assembly 10 locations, marked "PS", at 2-2, 4-2, 4-4, 6-2, 6-4, and 6-6, which are highlighted for purposes of illustration, represent those core locations which are provided with power suppression assemblies 20. It is to be noted that the control rods at locations 6-2 and 6-4 have been relocated to 5-3 and 8-2, respectively, to allow the placement of power suppression assemblies at the more beneficial locations 6-2 and 6-4.

The fuel loading plan adopted for the core example 9', shown in Figure 6, is in accordance with the placement of the power suppression rod assemblies 20. The number 1, 2, and 3 refer to fuel assemblies 10 which are once burned, twice burned and three times burned at the beginning of the life for the fuel cycle. Also, the designation "Fr" refers to fresh, nonburned fuel. The power suppression rod assemblies 20 are accordingly placed in all of the fresh fuel assemblies Fr 10 except for the peripheral core locations 8-1, 8-2, 8-3, and 7-5. Therefore, 36 of the previously 44 unused control rod locations are now provided with suppression rod assemblies 20.

In the example of core 9', shown in Figure 6, the end-of-life fresh fuel 10 Fr region burnup is kept low and the power produced by this region increases when the power suppression rod assemblies 20 are withdrawn, all of the three factors, leakage, power distribution, and burnup have moved in the direction of increasing end-of-life reactivity. This, of course, further reduces fuel cycle costs over the prior art low leakage fuel patterns. Additionally, a light spectral shift benefit may also be gained for the assemblies housing power suppression rods.

Figure 7 illustrates, in graph form, the advantage, or increase in $K_{EOL}$, gained by using the methods and apparatus described herein and by way of the example shown in Figure 6. This figure demonstrates the effect on region, or zone, reactivity by changing the burnup. Curve Y, shown as a solid line, is the normal, or prior art, decrease in reactivity relative to fuel burnup for a fuel assembly of a given enrichment. A family of such curves can be produced for changes in assembly enrichment. Such additional curves however need not be shown for purposes of this description of the invention. The curve Z, shown by the dotted line, is the relationship of the reactivity versus burnup when the power suppression rods 21 are inserted in fresh fuel (which are in region 1). At point W, the power suppression rod assembly 20 is withdrawn. Points V, V', and V'' represent the region burnup and reactivity at end-of-life for each fuel cycle; while T, T', and T'' represent the prior art core end-of-life without suppression rods 21. It is to be noted that region 3, in a three region core, is fixed (this is the discharge burnup) so that Point V "coincides with Point T". It is also to be noted that the benefit is determined by the change in reactivity ($\Delta$ K) of the core at end-of-life which comprises a function of each region's reactivity weighted by the region powers at end-of-life and the regions volumes, or by the decrease in burnup which comprises the sum of the decrease in burnup of each region divided by three. The change in end-of-life reactivity means a lesser amount of enrichment is possible with the use of power suppression rods to produce the equivalent amount power of a core without the suppression rods, resulting in a fuel cost savings.

It is to be noted that the increased reactivity benefit which obtains from the present invention may be accomplished by considering the core life cycle to be divided into a first period of operation and a second period of operation. The first period may comprise from startup to mid core life while the second period may comprise from mid core life to end of life. It is possible that the power suppression rods be inserted in the core during the first half of core life and removed during the second half of core life. However, in general, a greater amount of reactivity gain will occur when the first period of reactor operation comprises a greater majority of the core cycle life, for example, 90-95% and the second period comprises 10-5% of the overall core life. In fact, the first period may comprise from startup to the point in time when the core can no longer maintain criticality. However, for practical reasons, the first period should be somewhat less so that constant power is evenly produced.

The amount of absorption required for the suppression rods 21 can be determined by trial and error utilizing known neutronics equations. The burnup determines the capture cross-section, which determines the flux distribution, which determines the power, which, in turn, determines the burnup. Thus, due to this balance of interdependent variables, there is no apparent method to directly calculate the desired absorption. It will be necessary to create equilibrium cycles with different amounts of absorptions for the power suppression rods 21 in order to optimize its value. It will be necessary to simulate the cycle depletion to determine the overall impact on region burnup and end-of-life powers, as well as local fuel pin peak powers. All these factors must be appropriately balanced relative to one another. Since the absorption requirements to control local power peaking are usually higher near the beginning of the cycle in inboard fresh fuel assemblies, burnable absorbers should be considered to prevent the power suppression from having to be too high in absorption. Due to the presence of the suppression rods the burnable absorbers will necessarily need to be in the form of integral fuel absorbers.

While the invention has been described, disclosed, illustrated and shown in certain terms or certain embodiments or modifications which it has assumed in practice, the scope of the invention is not intended to be nor should it be deemed to be limited thereby and such other modifications or embodiments as may be suggested by the teachings herein are particularly reserved especially as they fall within the breadth and scope of the claims here appended.

## Claims

1. A method of operating a nuclear reactor with an extended life cycle of its nuclear core which comprises a stacked array of fuel assemblies some of which are high reactivity assemblies, and a plurality of control rod locations some of which have control rods adapted to be inserted within the fuel assemblies, the reactor core being arranged into a pattern having a majority of high reactivity fuel assemblies located inboard of the core periphery at the start of the life cycle of the core thereby to minimize the leakage of neutrons from the core; characterized in that the power sharing and, therefore, the burnup rate, of some of the high reactivity fuel assemblies during a first period of the core life cycle is limited by means of movable power suppression rods adapted to be inserted within the fuel assemblies, and comprising a non-depletable neutron absorber, said power suppression rods being inserted into said some of the high reactivity fuel assemblies; and that the power sharing of said some of the high reactivity fuel assemblies during a second period of the core life cycle is increased by removing said power suppression rods from said some of the high reactivity fuel assemblies during said second period of core life whereby an increase in overall core reactivity results from an increase in the low leakage effect and from the power sharing effect due to increase in the power produced by said some of the high reactivity fuel assemblies.

2. The method of claim 1, characterized in that said power suppression rods are inserted during a first period beginning from startup to after approximately mid core life and that said suppression rods are removed during a second period of core life comprising from said after approximately core mid life and to end of core life.

3. The method of claim 1 or 2, characterized in that fresh fuel assemblies are used as said high reactivity fuel assemblies.

4. The method of any of claims 1 to 3, characterized in that the power suppression rods and said some of said high reactivity fuel assemblies are positioned at control rod drive mechanism locations not having control rods used thereat.

## Patentansprüche

1. Verfahren zum Betreiben eines Kernreaktors mit verlängertem Standzeitzyklus seines nuklearen Kerns, der eine gepackte Anordnung von Brennelementen, von denen einige Hochreaktivitätsbrennelemente sind, und eine Mehrzahl von Steuerstabstellen aufweist, von denen einige in die Brennelemente einfahrbare Steuerstäbe aufweist, wobei der Reaktorkern in einem Muster angeordnet ist, bei welchem die Mehrzahl der Hochreaktivitätsbrennelemente beim Beginn des Standzeitzyklus des Reaktorkerns innerhalb der Kernperipherie angeordnet ist, um so das Auslecken von Neutronen aus dem Kern minimal zu halten, dadurch gekennzeichnet, daß der Leistungsbeitrag und folglich die Abbrandgeschwindigkeit einiger der Hochreaktivitätsbrennelemente während einer ersten Periode des Kernstandzeitzyklus mittels beweglicher Leistungsdämpfungsstäbe begrenzt wird, die in die Brennelemente einfahrbar sind und einen nicht erschöpfbaren Neutronenabsorber enthalten, wobei die Leistungsdämpfungsstäbe in die genannten einigen der Hochreaktivitätsbrennelemente einfahrbar sind, und daß der Leistungsbeitrag dieser einigen Hochreaktivitätsbrennelemente während einer zweiten Periode des Kernstandzeitzyklus durch Ausfahren der Leistungsdämpfungsstäbe aus diesen einigen Hochreaktivitätsbrennelementen während der zweiten Periode der Kernstandzeit gesteigert wird, so daß eine Steigerung der Gesamtkernreaktivität aufgrund einer Erhöhung der Niedrigleckagewirkung und aus der Leistungsbeitragswirkung aufgrund der Steigerung der durch diese einige Hochreaktivitätsbrennelemente erzeugten Leistung eintritt.

2. Verfahren nach Anspruch 1, dadurch gekennzeichnet, daß die Leistungsdämpfungsstäbe während einer ersten Periode beginnend beim Anfahren bis nach etwa der Mitte der Kernstandzeit eingefahren sind, und daß die Dämpfungsstäbe während einer zweiten Periode der Kernstandzeit von nach etwa der Mitte Kernstandzeit bis zum Ende der Kernstandzeit ausgefahren sind.

3. Verfahren nach Anspruch 1 oder 2, dadurch gekennzeichnet, daß frische Brennelemente als die genannten Hochreaktivitätsbrennelemente verwendet werden.

4. Verfahren nach einem der Ansprüche 1 bis 3, dadurch gekennzeichnet, daß die Leistungsdämpfungsstäbe und die genannten einigen der Hochreaktivitätsbrennelemente an Steuerstabantriebsmechanismusstellen positioniert sind, an denen keine Steuerstäbe eingesetzt sind.

**Revendications**

1. Procédé pour faire fonctionner un réacteur nucléaire avec un cycle de vie prolongé de son coeur, lequel contient un réseau empilé d'assemblages de combustible dont certains ont une forte réactivité, et une pluralité d'emplacements pour des barres de commande dont certains comportent des barres de commande qui peuvent être insérées dans les assemblages de combustible, le coeur du réacteur étant disposé selon un motif comportant une majorité d'assemblages de combustible hautement réactifs situés loin de la périphérie du coeur au début du cycle de vie du coeur, pour minimiser ainsi les fuites de neutrons hors du coeur, **caractérisé** en ce que la répartition de puissance, et donc la vitesse de combustion, de certains assemblages de combustible hautement réactifs pendant une première période du cycle de vie du coeur est limitée grâce à des barres déplaçables de suppression de puissance, qui peuvent être insérées dans les assemblages de combustible, ces barres contenant un absorbeur de neutrons inépuisable et pouvant être insérées dans lesdits certains assemblages de combustible hautement réactifs, et en ce que la répartition de puissance desdits certains assemblages de combustible hautement réactifs est augmentée pendant une seconde période du cycle de vie du coeur, par le retrait desdites barres de suppression de puissance desdits certains assemblages de combustible hautement réactifs pendant ladite seconde période du cycle de vie du coeur, de sorte qu'une augmentation de la réactivité totale du coeur résulte de l'augmentation du faible effet de fuite et de l'effet de la répartition de puissance dû aux augmentations de puissance produites par lesdits certains assemblages de combustible hautement réactifs.

2. Procédé selon la revendication 1, **caractérisé** en ce que lesdites barres de suppression de puissance sont introduites pendant une première période qui commence au démarrage et se poursuit au-delà de la demi-durée de vie approximative du coeur, et en ce que lesdites barres de suppression sont retirées pendant une seconde période de la durée de vie du coeur, allant de ladite demi-durée de vie approximative jusqu'à la fin de la durée de vie du coeur.

3. Procédé selon la revendication 1 ou 2, **caractérisé** en ce que des assemblages de combustible neufs sont utilisés en tant qu'assemblages de combustible hautement réactifs.

4. Procédé selon l'une quelconque des revendications 1 à 3, **caractérisé** en ce que les barres de suppression de puissance et lesdits certains assemblages de combustible hautement réactifs sont placés au niveau des emplacements du mécanisme d'entraînement des barres de commande ne comportant pas de barres de commande en service.

FIG.1

FIG.2

FIG.3

FIG.4

O 53 CONTROL ROD
LOCATIONS
X 44 UNUSED
LOCATIONS

FIG.5

12

FIG.6

FIG.7